# EUROPEAN PATENT APPLICATION

(11) **EP 1 701 579 A2**
(43) Date of publication of application: **13.09.2006**
(21) Application number: 06110829.6
(22) Date of filing: 08.03.2006
(51) Int. Cl.: H04Q 9/00

(54) **Generic collection and delivery of telemetry data**

(30) Priority: 11.03.2005 US 77818
(71) Applicant: Microsoft Corporation, Redmond WA 98052 (US)
(72) Inventor: Mavrinac, Erik C., Redmond, WA 98052 (US); Paranthaman, Gowri Shankar, Redmond, WA 98052 (US); Foucher, Trevor Yates, Redmond, WA 98052 (US); Pereira, Wesley Owen, Redmond, WA 98052 (US)
(74) Representative: Grünecker, Kinkeldey, Stockmair & Schwanhäusser Anwaltssozietät

(57) **Abstract**

The present invention extends to generic collection and delivery of telemetry data. A telemetry component receives telemetry data, through a common telemetry interface that is accessible to a plurality of applications, from an application. The received telemetry data is aggregated with any existing telemetry in a telemetry database. In response to a detected event, the telemetry component sends the telemetry data, via a corresponding telemetry stream, to a telemetry service. The telemetry service receives the telemetry message, via the corresponding telemetry stream, from the telemetry component. The telemetry service extracts telemetry data and identifies one or more pluggable telemetry handlers that have registered for the telemetry data. The telemetry service dispatches the extracted telemetry data to the one or more identified pluggable telemetry handlers. The telemetry service acknowledges receipt of the telemetry data to the telemetry component.

## Description

### CROSS-REFERENCE TO RELATED APPLICATIONS

Not applicable.

### BACKGROUND OF THE INVENTION

### 1. The Field of the Invention

The present invention relates to gathering computer diagnostic information and, more particularly, to generic collection and delivery of telemetry data.

### 2.Background and Relevant Art

Computer systems and related technology affect many aspects of society. Indeed, the computer system's ability to process information has transformed the way we live and work. For example, computer systems typically include software applications for performing a host of tasks (e.g., word processing, scheduling, and database management) that prior to the advent of the computer system were performed manually. A computer system can also include maintenance, diagnostic, and security applications (e.g., backup applications, health checkers, anti-virus applications, firewalls, etc.) that help to insure that the computer system remains, or can be returned to, an appropriate operating state. For example, an anti-virus application can detect and eliminate computer viruses before any harm is done to the computer system.

Many computer systems are also typically coupled to one another and to other electronic devices to form both wired and wireless computer networks over which the computer systems and other electronic devices can transfer electronic data. As a result, many tasks performed at a computer system (e.g., voice communication, accessing electronic mail, controlling home electronics, Web browsing, and printing documents) include the exchange of electronic messages between a number of computer systems and/or other electronic devices via wired and/or wireless computer networks.

Networks have in fact become so prolific that a simple network-enabled computing system may communicate with any one of millions of other computing systems spread throughout the globe over a conglomeration of networks often referred to as the "Internet". Such computing systems may include desktop, laptop, or tablet personal computers; Personal Digital Assistants (PDAs); telephones; or any other computer or device capable of communicating over a digital network.

Due at least in part to the proliferation network computing, many software vendors provide network based updates for their applications. This makes updates available to large numbers of users in a cost efficient manner (e.g., as opposed to manufacturing and shipping up CDs). For example, a vendor can include the latest versions and/or upgrades for their applications at a company Web site on the Internet. Thus, any user (with Internet access) can access the Web site and download updates to their computer system. Downloaded updates can then be installed at the computer system.

Some vendors integrate network-based update capability into their applications. For example, applications can include an "update" control that, when selected, connects to a known network location and checks for updates. Still other applications automatically check for updates without requiring the selection of an "update" control. In any event, these applications can then present a list of available updates (either before or after the updates are downloaded) to a user for selection. Any selected updates can then be, if appropriate, downloaded and installed on the computer system.

Some applications, particularly maintenance, diagnostic, and security applications, can also (often in response to user approval) send limited application specific data back the software vendor for analysis. For example, an anti-virus application can send a list of viruses that have been detected and/or removed from a computer system to the vendor of the anti-virus application. Likewise, a SPAM blocking application can send a list of electronic mail addresses to a vendor for inclusion in a blocked-list. Based on the application specific data, vendors can gain some insight into how their applications are performing. Vendors may also be able to provide more complete updates and respond more quickly to identified vulnerabilities in their applications.

However, each application typically includes a proprietary mechanism (e.g., proprietary interface, proprietary protocol, etc.) for sending application specific data back to a vendor. Thus, there is typically no way for an application developed by one vendor to send application specific data to a variety of other vendors. This is unfortunate because application specific data from one application may be valuable to solving problems with or providing updates to other applications. For example, it may be valuable to a SPAM blocking application vendor to know that inappropriate configuration of particular version of a firewall can allow the transfer of e-mail messages through otherwise unused ports.

However, there may be no efficient way to transfer the firewall specific data to the SPAM blocking application vendor, since the SPAM blocking application vendor's proprietary mechanism for sending application-specific data is not compatible with the firewall vendor's proprietary mechanism. It is also unfortunate because each time a new product is developed by any vendor, software developers must learn the idiosyncrasies of the proprietary mechanism. In addition, there is no easy and generic mechanism to place the uploaded data from one component of an application into multiple data sinks, where different data sinks can have different reasons, methods, and criteria for analyzing the data.

Further, there is no efficient manner to filter application specific data for a particular purpose or use by a particular vendor. For example, even if firewall specific data could be delivered to the SPAM blocking application vendor, there is typically no mechanism to reduce the firewall specific data down to electronic mail related data. That is, the firewall specific data would also include data related to Web based communication, file transfers, etc., which have little, if any, significance to the SPAM blocking application vendor.

Therefore systems, methods, and computer program products for generic collection and delivery of telemetry data would be advantageous.

### BRIEF SUMMARY OF THE INVENTION

The foregoing problems with the prior state of the art are overcome by the principles of the present invention, which are directed towards methods, systems, and computer program products for generic collection and delivery of telemetry data. A telemetry component receives telemetry data, through a common telemetry interface that is accessible to a plurality of components of an application or to a plurality of applications, from an application at a computer system. The telemetry component aggregates the received telemetry data with any existing telemetry data in the telemetry database.

The telemetry component detects a send telemetry event. The computer system includes an appropriate portion of the aggregated telemetry data in a telemetry message. The telemetry component sends a telemetry stream, via the telemetry message, to a telemetry service in response to the detected send telemetry event. A telemetry service receives the telemetry stream, via the telemetry message, from the telemetry component. The telemetry service extracts telemetry data of a specified type from the telemetry message.

The telemetry service identifies one or more pluggable telemetry handlers that have registered for telemetry data of the specified type. The telemetry service dispatches the extracted telemetry data to the one or more identified pluggable telemetry handlers. The telemetry service sends an acknowledgment to the telemetry component, the acknowledgment indicating that the telemetry service received the telemetry message, or in an error condition, what portions of the telemetry were received and do not need to be retransmitted, and what portions were not received and should be retransmitted if appropriate. The telemetry component receives the acknowledgment from the telemetry service.

These and other objects and features of the present invention will become more fully apparent from the following description and appended claims, or may be learned by the practice of the invention as set forth hereinafter.

### BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:

Figure 1 illustrates an example of a computer architecture that facilitates generic collection and delivery of telemetry data through a common interface.

Figure 2 illustrates an example flow chart of a method for generic collection and delivery of telemetry data through a common interface.

Figure 3 illustrates a suitable operating environment for the principles of the present invention.

### DETAILED DESCRIPTION OF THE PREFERRED EMBODIMENTS

The foregoing problems with the prior state of the art are overcome by the principles of the present invention, which are directed towards methods, systems, and computer program products for generic collection and delivery of telemetry data. A telemetry component receives telemetry data, through a common telemetry interface that is accessible to a plurality of components of an application or to a plurality of applications, from an application at a computer system. The telemetry component aggregates the received telemetry data with any existing telemetry data in the telemetry database.

The telemetry component detects a send telemetry event. The computer system includes an appropriate portion of the aggregated telemetry data in a telemetry message. The telemetry component sends a telemetry stream, via the telemetry message, to a telemetry service in response to the detected send telemetry event. A telemetry service receives the telemetry stream, via the telemetry message, from the telemetry component. The telemetry service extracts telemetry data of a specified type from the telemetry message.

The telemetry service identifies one or more pluggable telemetry handlers that have registered for telemetry data of the specified type. The telemetry service dispatches the extracted telemetry data to the one or more identified pluggable telemetry handlers. The telemetry service sends an acknowledgment to the telemetry component, the acknowledgment indicating that the telemetry service received the telemetry message, or in an error condition, what portions of the telemetry were received and do not need to be retransmitted, and what portions were not received and should be retransmitted if appropriate. The telemetry component receives the acknowledgment from the telemetry service.

Embodiments within the scope of the present invention include computer-readable media for carrying or having computer-executable instructions or data structures stored thereon. Such computer-readable media may be any available media, which is accessible by a general-purpose or special-purpose computer system. By way of example, and not limitation, such computer-readable media can comprise physical storage media such as RAM, ROM, EPROM, CD-ROM or other optical disk storage, magnetic disk storage or other magnetic storage devices, solid state storage devices, or any other media which can be used to carry or store desired program code means in the form of computer-executable instructions, computer-readable instructions, or data structures and which may be accessed by a general-purpose or special-purpose computer system.

In this description and in the following claims, a "network" is defined as one or more data links that enable the transport of electronic data between computer systems and/or modules. When information is transferred or provided over a network or another communications connection (either hardwired, wireless, or a combination of hardwired or wireless) to a computer system, the connection is properly viewed as a computer-readable medium. Thus, any such connection is properly termed a computer-readable medium. Combinations of the above should also be included within the scope of computer-readable media. Computer-executable instructions comprise, for example, instructions and data which cause a general-purpose computer system or special-purpose computer system to perform a certain function or group of functions. The computer executable instructions may be, for example, binaries, intermediate format instructions such as assembly language, or even source code.

In this description and in the following claims, a "computer system" is defined as one or more software modules, one or more hardware modules, or combinations thereof, that work together to perform operations on electronic data. For example, the definition of computer system includes the hardware components of a personal computer, as well as software modules, such as the operating system of the personal computer. The physical layout of the modules is not important. A computer system may include one or more computers coupled via a network. Likewise, a computer system may include a single physical device (such as a mobile phone or Personal Digital Assistant "PDA") where internal modules (such as a memory and processor) work together to perform operations on electronic data.

Those skilled in the art will appreciate that the invention may be practiced in network computing environments with many types of computer system configurations, including, personal computers, laptop computers, hand-held devices, multi-processor systems, microprocessor-based or programmable consumer electronics, network PCs, minicomputers, mainframe computers, mobile telephones, PDAs, pagers, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

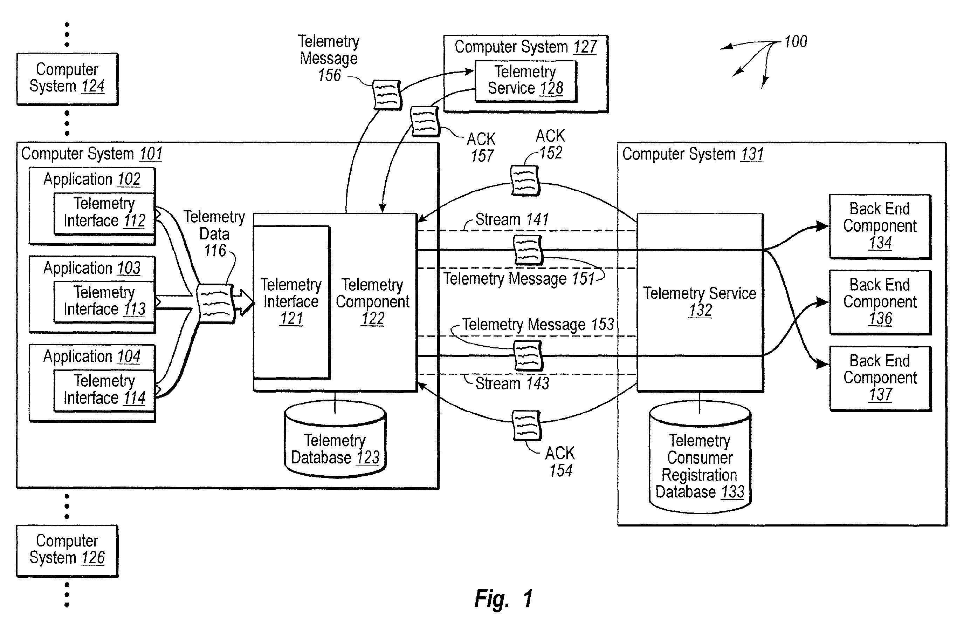

Figure 1 illustrates an example of a computer architecture 100 that facilitates generic collection and delivery of telemetry data through a common interface. As depicted, computer architecture 100 includes computer systems 101, 124, 126, 127, and 131. A series of three vertical periods (a vertical ellipsis) before, between, and after computer systems 124, 101, and 126, indicates that other computer systems can also be included in computer architecture 100. Computer systems 101, 124, 126, 127, and 131 can be connected to a network such as, for example, a Local Area Network ("LAN"), Wide Area Network ("WAN"), or even the Internet. Accordingly, computer systems 101, 124, 126, 127, and 131 can receive data from and send data to one another as well as other network connected computer systems (not shown). For example, computer systems 101, 124, 126, 127, and 131, as well as other network connected computer systems, can create message related data and exchange message related data (e.g., Internet Protocol ("IP") datagrams and other higher layer protocols that utilize IP datagrams, such as, Transmission Control Protocol ("TCP"), Hypertext Transfer Protocol ("HTTP"), Simple Mail Transfer Protocol ("SMTP"), etc.) over a network. For example, computer systems 101, 124, 126, 127, and 131 can create SOAP envelopes and exchange SOAP envelopes over a corresponding network.

Computer system 101 includes telemetry component 122, applications 102, 103, and 104 and telemetry database 123. Generally, telemetry component 122 is configured to gather telemetry data from applications and store gathered telemetry data in telemetry database 123. Telemetry component 122 includes telemetry interface 121 for interfacing with applications (and other software components) to receive telemetry data. Telemetry interface 121 can be a common telemetry interface that is made available to application developers.

Thus, application developers can include corresponding compatible telemetry interfaces in developed applications. For example, applications 102, 103, and 104 include telemetry interfaces 112, 113, and 114 respectively. Telemetry interfaces 112, 113, and 114 can be telemetry interfaces developed for compatibility with telemetry interface 121. Accordingly, each of applications 102, 103, and 104 can be compatibly configured to send telemetry data to telemetry component 122.

Applications can be configured to generate one or more different types of telemetry data. Telemetry data can include various different types of more general telemetry data, such as, for example, Quality of Service ("QoS") telemetry data, boot time telemetry data, computer system health telemetry data, catastrophic failure telemetry data, etc. More general telemetry data can be of interest to a variety of different application developers/vendors. For example, anti-virus vendors, firewall vendors, and backup vendors may all have interest in catastrophic failure data for use in making their applications more robust.

Telemetry data can also include various different types of more customized telemetry data, such as, for example, anti-virus telemetry data, firewall telemetry data, SPAM blocking telemetry data, backup telemetry data, etc. Customized telemetry data may be of interest to a reduced subset of or only a single application developer/vendor. For example, telemetry data indicating the date/time of a detected virus may only be of interest to an anti-virus developer/vendor.

Telemetry data can include count telemetry data. For example, telemetry can include a count of how many viruses have been detected at computer system 101 or how many times computer system 101 has been rebooted in a specified period of time. Telemetry data can also include snapshot telemetry data indicating status. For example, snapshot telemetry data can include available systems resources at a particular time (e.g., when a "snapshot" is taken).

Telemetry component 122 can identify different types of telemetry data and store (or enqueue) telemetry data by type in telemetry database 123. For example, telemetry component can identify QoS data received from applications 102, 103 and 104 and can aggregate the received QoS data with previously stored QoS data. Other types of more general telemetry data as well as different types of customized telemetry data can be similarly aggregated in telemetry database 123.

In response to an event, such as, for example, expiration of a timer, a request from a telemetry service, detection of a catastrophic failure, etc., telemetry component 122 can send (or dequeue) telemetry data to telemetry service 132. Telemetry data can be transferred in various different telemetry streams. For example, telemetry component 122 can send a first type of telemetry data (e.g., boot time telemetry data) in stream 141 and second type of telemetry data (e.g., back-up telemetry data) in stream 143.

Although not expressly depicted, it should be understood that each of computer systems 124 and 126, as well as any other network connected computer systems can be configured similar to computer system 101. That is, computer systems 124 and 126, as well as other network connected computer systems, can include one or more applications that send telemetry data through a common telemetry interface to a telemetry component. The telemetry components can identify different types of telemetry data and appropriately store the telemetry data in a corresponding telemetry databases. In response to some event, the telemetry components can send telemetry data (e.g., in appropriate telemetry streams). For example, each of computer systems 101, 124, and 126 can send QoS telemetry data to telemetry service 132 via a corresponding QoS telemetry streams, boot time telemetry data to telemetry service 132 via a corresponding boot time telemetry streams, etc.

Computer system 131 includes telemetry service 132, telemetry consumer registration database 133, and backend components 134, 136, and 137. Although Figure 1 depicts backend components 134, 136, and 137 as being included in computer system 131, it should be understood that backend components 134, 136, and 137 can be distributed across more than one computer system. For example, backend components 134, 136, and 137 can be located partly at computer system 101 and located partly at one or more other computer systems computer architecture 100. Generally, telemetry service 132 is configured to receive telemetry messages from one or more computer systems (e.g., computer systems 124, 101, and 126). For example, telemetry service can receive telemetry messages via telemetry streams 141 and 143, via corresponding streams from computer systems 124 and 126, and via corresponding streams from other network connected computer systems.

Backend components, such as, for example, backend components 134, 136, and 137, can register for one or more different types (e.g., QoS, boot time, maintenance, etc.) of telemetry data. Telemetry service 132 can receive the registrations and store the registrations in telemetry consumer registration database 133. When a telemetry message is received, telemetry service 132 identifies the type of telemetry data contained in the telemetry message. Telemetry service 132 then checks telemetry consumer registration database 133 for backend components that have registered for the identified type of telemetry data. Telemetry service 132 then distributes the contained telemetry data to the registered backend components. In response to appropriate reception of a telemetry message, telemetry service 132 can send an acknowledgment back to the telemetry component that submitted the telemetry message.

Backend components can store telemetry data for subsequent use. For example, a QoS backend component can store QoS telemetry data in a QoS database, a boot time analysis database can store boot time telemetry data in a boot time analysis database, a firewall backend can store firewall telemetry data in a firewall database, etc., Alternately or in combination with storage, backend components can send electronic messages to a developer/vendor. For example, in response to multiple detections of a previously unknown virus, an anti-virus backend component can send an alert to the anti-virus application vendor.

Thus generally, it may be that a telemetry service is a central receiving point for telemetry data from telemetry components at a plurality of other networked computer systems. Communication between a telemetry service and telemetry components can be secured using two way authentication and signed messages. For example, communication between telemetry component 122 and telemetry service 132 can be secured using two-way authentication over the Secure Sockets Layer ("SSL") protocol. A telemetry service can also throttle (e.g., by sampling a subset of available telemetry components) the reception of telemetry data per telemetry stream such that manageable (and configurable) numbers of samples are processed. For example, telemetry service 132 can sample a specified number of telemetry components (e.g., some number less than all of the available telemetry components) for QoS telemetry data per hour so as to maintain a manageable set of QoS telemetry data. Thus, sampling can reduce the likelihood that a significant amount of computer system 131's resources are consumed to process QoS telemetry data (or are consumed to process any other type of telemetry data).

Telemetry data can include a series of name/value pairs. In some embodiments, name/value pairs are understandable to an application that generates the name/value pairs and a corresponding back-end component. For example, application 102 and back-end component 134 may understand one or more name/value pairs included in telemetry message 151. However, telemetry component 122 and telemetry service 132 may not understand (nor care about) the one or more name/value pairs.

In some embodiments, telemetry is targeted to a specific computer system. For example, telemetry component 122 can send telemetry message 156 to telemetry service 128. Telemetry message 156 can include telemetry data (e.g., name/value pairs) that may be useful to a user of computer system 127 in diagnosing problems at computer system 101. In response to receiving targeted message 156, telemetry service 128 can send ACK 157 (an acknowledgement that targeted message 156 was received) to telemetry component 122. Piggybacked on top of ACK 157 can be a targeted message (potentially from a different component of computer system 127) based on telemetry message 156 being from computer system 101. Telemetry service 128 can also present received telemetry data at a user-interface.

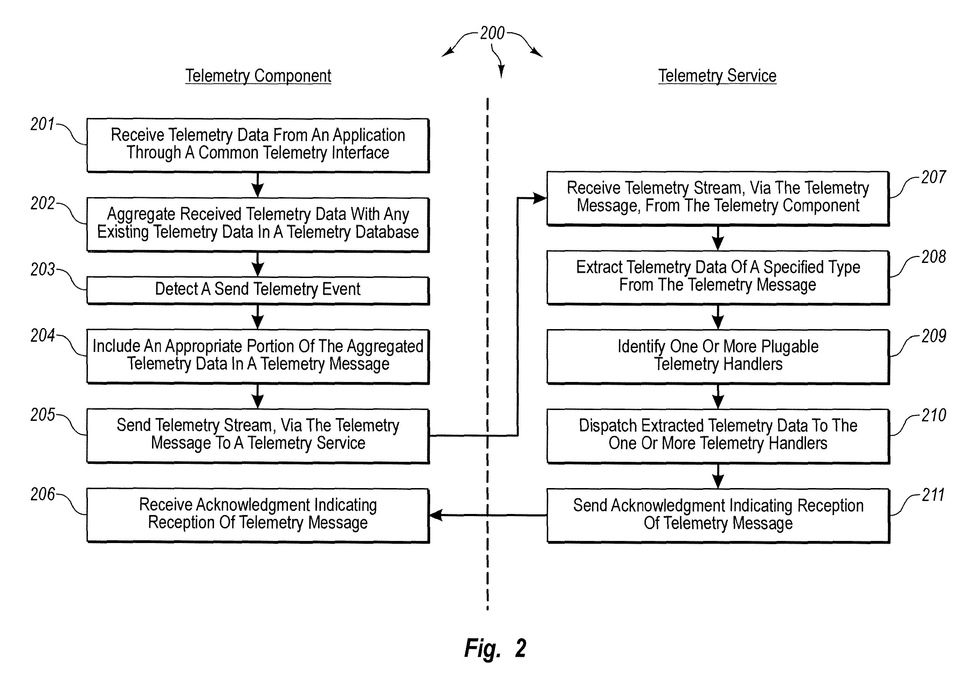

Figure 2 illustrates an example flow chart of a method 200 for generic collection and delivery of telemetry data through a common interface. Method 200 will be described with respect to the components and data in computer architecture 100.

Method 200 includes an act of receiving telemetry data from an application through a common telemetry interface (act 201). For example, telemetry component 122 can receive telemetry data 116 through telemetry interface 121. Telemetry data 116 can be generated at one or more of applications 102, 103, and 104 and sent via common telemetry interfaces 112, 113, and 114 respectively. Thus, telemetry data 116 can include name/value pairs, name/value counters, custom telemetry and/or raw data representing different types of telemetry data. Telemetry data can be represented in extensible Markup Language ("XML") form, or, for example, for name/value pair data, can be represented as string parameters to functions that implement the telemetry interface.

Method 200 includes an act of aggregating received telemetry data with any existing telemetry data in a telemetry database (act 202). For example, telemetry component 122 can aggregate telemetry data 116 into telemetry database 123. Telemetry data 116 can be aggregated accordingly to telemetry data type. For example, some portions of telemetry data 116 can be aggregated with existing QoS telemetry data, some portions aggregated with boot time existing boot time telemetry data, some portions aggregated with existing backup telemetry data, etc. Aggregating telemetry data can include updating counter telemetry data and replacing snapshot data. For example, when a new virus is detected the number of detected viruses can be incremented. Similarly, when a new snapshot of system resources is taken old snapshot of system resources can be replaced.

Method 200 includes an act of detecting a send telemetry event (act 203). For example, telemetry component 122 can detect a send telemetry event corresponding to telemetry data in telemetry database 123. A send telemetry event can be, for example, expiration of a timer, a request from a telemetry service, a catastrophic failure, etc.

Method 200 includes an act of including an appropriate portion of the aggregated telemetry data in a telemetry message (act 204). The appropriate portion of aggregated telemetry can be telemetry data responsive to and/or designated by the send telemetry event. For example, telemetry component 122 can include a portion of telemetry data from telemetry database 123 in telemetry message 151. The included telemetry data can be of a specified type, such as, for example, QoS telemetry data, boot time telemetry data, snapshot telemetry, custom telemetry data, etc. The specified may be included in response to the detected send telemetry event. For example, telemetry component 122 can include QoS telemetry data in telemetry message 151 in response to a request for QoS telemetry data form telemetry service 132.

Telemetry data can be formatted in accordance with a schema. The following targeted messaging request and telemetry upload XML schema definition ("XSD") document defines example formats for messaging requests and sending telemetry data:

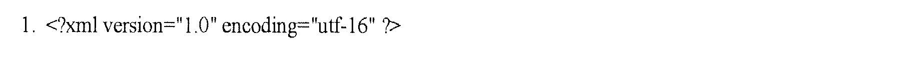

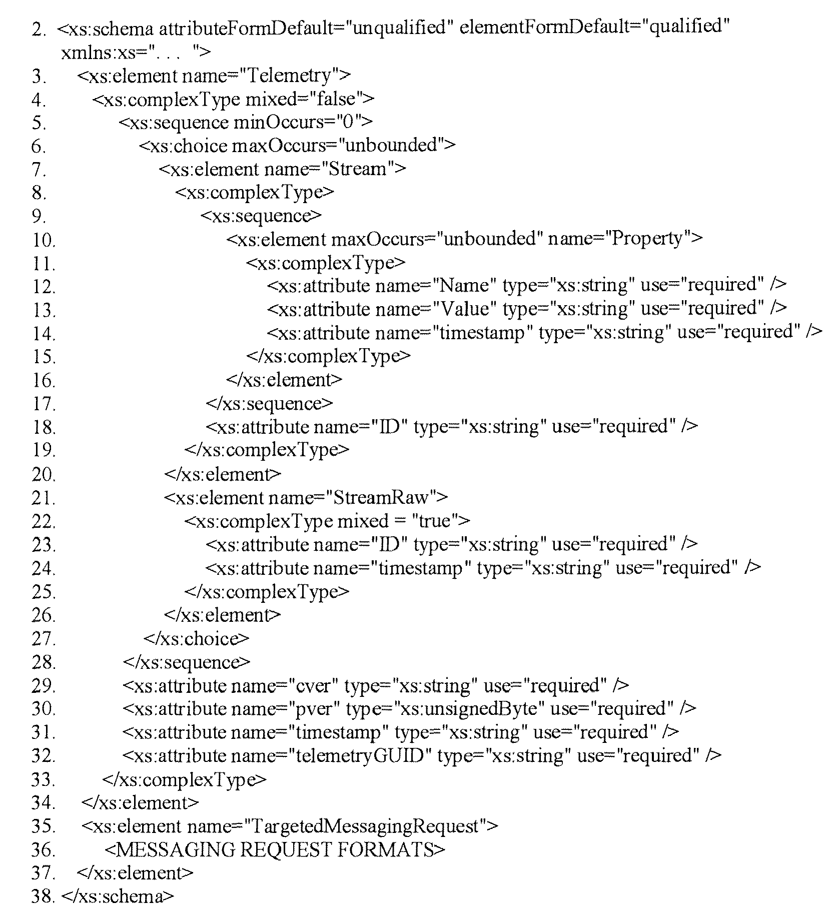

The data definitions between lines 3 and 34 define a Telemetry element. The data definitions between lines 7 and 20 define a Stream element that can be included in a Telemetry element. Line 10 defines a Property element that can be included in the Stream element and indicates that zero or more Property elements can be included in the Stream element. Lines 12-14 define Name, Value, and Timestamp attributes respectively of the Property element. Line 18 defines an ID attribute for the Stream element.

The data definitions between lines 21 and 26 define a StreamRaw element. Lines 23 and 24 define an ID attribute and Timestamp attribute respectively for the StreamRaw element. Line 6 represents that one or more Stream elements and/or one or more StreamRaw elements can be included in a telemetry element. Lines 29-32 define Telemetry element attributes (versions, timestamp, and GUID) that can be used to identify the Telemetry element.

Lines 35-37 represent that additional targeted messaging request formats can also be defined. These targeted messaging request formats can be used to format targeted message requests that are piggybacked along with uploaded telemetry data. For example, telemetry message 156 can include telemetry data along with a targeted message request requesting that telemetry service 128 analyze the included telemetry data. Telemetry message 151 and/or 153 can also include targeted message requests directed to modules at computer system 131. Thus, data for other non-telemetry related modules can be included in a telemetry ACK message eliminating the need to send the data in a separate message. This piggybacking potentially conserves network bandwidth.

Telemetry component 122 can be configured to appropriately include a targeted message request in a telemetry message. Telemetry services 132 and 128 can be configured to dispatch any targeted message requests to the appropriate modules.

Accordingly, a telemetry message (e.g., a SOAP message) can include a Telemetry element containing one or more Stream elements, one or more StreamRaw elements, and one or more target message requests. The following XML, portion represents an example telemetry message formatted in accordance with the example formats in the targeted messaging request and telemetry upload XSD document:

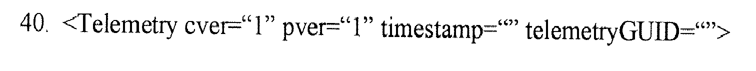

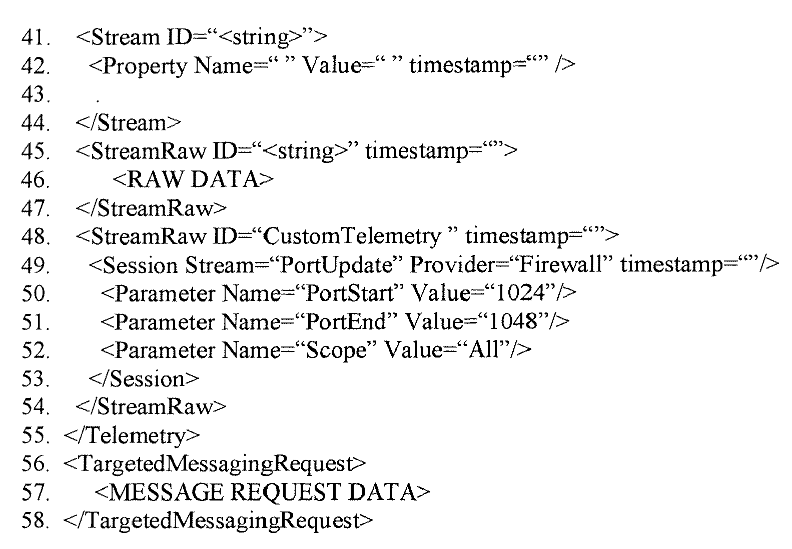

Lines 40 through 55 represent a Telemetry element. That attributes and corresponding attribute values cver="1" pver="1" timestamp="" telemetryGUID="" can be used to identify the Telemetry element. Although not expressly depicted in the above XML, portion, timestamp and telemetryGUID attributes have corresponding values. Further, the values of "1" for the cver and pver attributes are example values and the values for cver and pver can vary across different client and protocol versions.

Lines 41-44 represent a Stream element. The attribute and corresponding value ID="<string>" identifies a specified stream (e.g., stream 141 or stream 143) that is associated with the telemetry data contained in the Stream element. Line 42 represents a property element. The attributes and corresponding values Name =" " Value=" " respectively, identify a name/value pair. The attribute and corresponding value timestamp="" indicates a time when the name/value pair were obtained. Line 43 represents that at lest one other Property element can be contained in the Stream element represented at lines 41-44.

Lines 45-47 represent a StreamRaw element. The attributes and corresponding values D="<string>" and timestamp="" respectively, identify a specified stream (e.g., stream 141 or stream 143) that is associated with the telemetry data contained in the StreamRaw element and indicate a time when the telemetry data contained in the StreamRaw element was obtained. Line 46 generally represents that raw telemetry data, such as, for example, bulk XML or binary data, is contained in the StreamRaw element. Binary data can be encoded, for example, into a base-64 string.

StreamRaw elements can also be used to send Custom Telementry. Lines 48-54 repsent another StreamRaw element. The attributes and corresponding values ID="CustomTelemetry" timestamp="" identify a custom telemetry stream (e.g., stream 141 or stream 143) that is associated with the telemetry data contained in the StreamRaw element and indicate a time when the telemetry data contained in the StreamRaw element was obtained. Lines 49-53 depict a Session element. The Session element may have meaning to an application (e.g., application 102) that generates the custom telemetry data and a corresponding backend component (back end component 134) that receives the custom telemetry data. However, the Session element may have no meaning to intermediate modules that transfer the custom telemetry data (e.g., telemetry component 122 and telemetry service 132).

The attributes and corresponding values Stream="PortUpdate" Provider="Firewall" timestamp="" indicate that the custom telemetry is more specifically associated with PortUpdate stream of a Firewall provider and indicates a time when the custom telemetry data contained in the Session element was obtained. Lines 50 and 51 represent that ports ranging in number from 1024 - 1048 were updated.

Lines 56 though 58 represent a TargetedMessageRequest. Line 57 represents message request data that can be piggybacked along with the telemetry data at lines 40-55 in a telemetry message.

Method 200 includes an act of sending a telemetry stream, via the telemetry message, to a telemetry service (act 205). For example, telemetry component 122 can send stream 141, via telemetry messages 151, to telemetry service 132. Similarly, telemetry component 122 can send stream 143, via telemetry message 153, to telemetry service 132. Each of telemetry messages 152 and 153 can include one or more Stream and/or StreamRaw elements corresponding to streams 141 and 143 respectively.

Method 200 includes an act of receiving the telemetry stream, via the telemetry message, from the telemetry component (act 207). For example, telemetry service 132 can receive stream 141, via telemetry message 152, from telemetry component 122. Similarly, telemetry service 132 can receive stream 143, via telemetry message 153, from telemetry component 122.

Method 200 includes an act of extracting telemetry data of a specified type from the telemetry message (act 208). For example, telemetry service 132 can extract QoS telemetry data from telemetry message 151. Similarly, it may be that telemetry service 132 extracts custom firewall telemetry data form message 153.

Method 200 includes an act of identifying one or more pluggable telemetry handlers (act 209). For example, telemetry service 132 can identify that back end components 134 and 137 have registered for QoS telemetry data. Similarly, telemetry service 132 can identify that back end component 136 has registered for custom firewall telemetry. Generally, a back end components can include an interface for accessing specified types of telemetry data the back end component has registered for. A backend component can also include an interface that is specialized for accessing name/value pairs.

In some embodiments, telemetry service 132 checks previously received registrations contained in telemetry consumer registration database 133. From time to time, back end components can register an interest in telemetry data from specified telemetry streams, for example, by indicating a stream ID value to telemetry service 132. Telemetry service 132 can record registrations in telemetry consumer registration database 133. When telemetry data is received, telemetry service 132 can compare the stream ID value (e.g., the "<string>" portion of ID="<string>") of the received telemetry data to registered stream ID values. When a match is identified, the telemetry data is dispatched to the back end component that submitted the registration.

Method 200 includes an act of dispatching telemetry data to the one or more handlers (act 210). For example, telemetry service 132 can dispatch QoS telemetry data contained in telemetry message 151 to backend components 134 and 137. Similarly, telemetry service 132 can dispatch custom firewall telemetry data to backend component 136.

Method 200 includes an act of sending an acknowledgment indicating reception of the telemetry data (act 211). For example, telemetry service 132 can send ACK 152 indicating reception of telemetry data contained in telemetry message 151. Similarly, telemetry service 132 can send ACK 154 indicating reception of telemetry data contained in telemetry message 153. Alternately, for example, in an error condition, telemetry service 132 can send an indication of what portions of the telemetry data were received and do not need to be retransmitted, and what portions were not received and should be retransmitted if appropriate. ACK 154 can also indicate whether telemetry service 132 was or was not able to process portions of telemetry message 151.

Acknowledgments can be formatted in accordance with a schema. The following target message response and telemetry acknowledgement XSD document defines example formats for sending a telemetry acknowledgment:

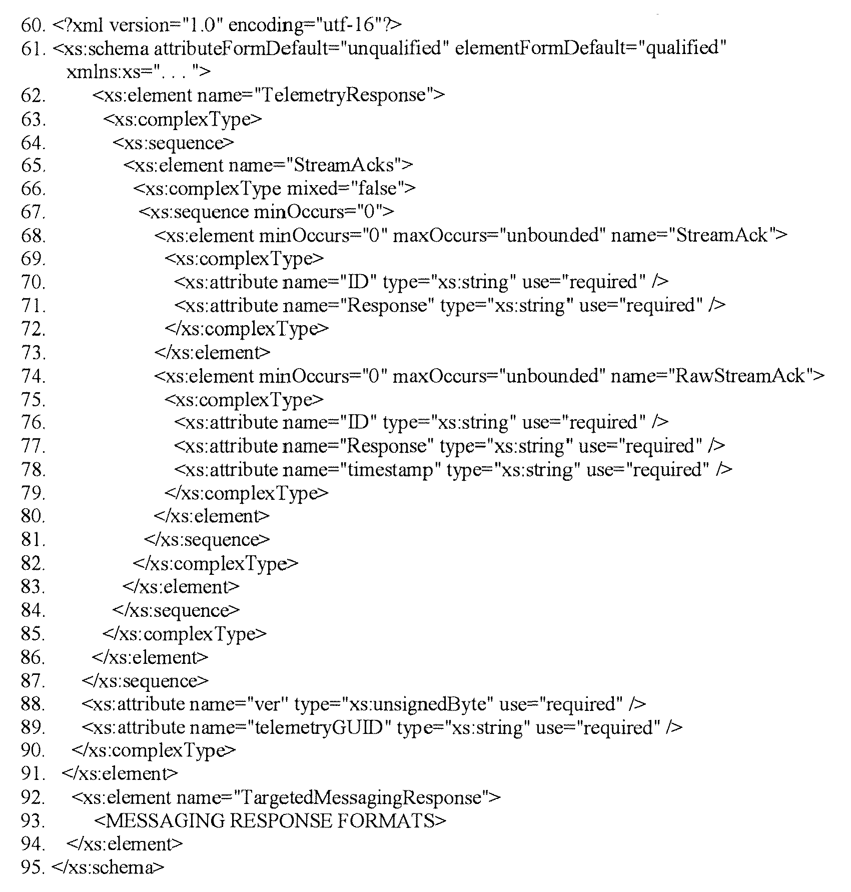

The data definitions between lines 62 and 91 define a TelemetryResponse element. The data definitions between lines 65 and 83 define a StreamAcks element that can be included in a TelemetryResponse element. Lines 68-73 define a StreamAck element that can be used to acknowledge the receipt of telemetry data via a stream. Lines 70 and 71 define an ID attribute and Response attribute respectively for the StreamAck element. Lines 74-80 define a RawStreamAck element that can be used to acknowledge the receipt of telemetry data via a raw stream. Lines 76-78 define an ID attribute, Response attribute, and timestamp attribute respectively for the RawStreamAck element.

Lines 92-94 represent that additional targeted messaging response formats can also be defined. These targeted messaging response formats can be used to format targeted message responses that are piggybacked along with telemetry acknowledgments. For example, ACK 157 can include telemetry acknowledgments (of telemetry data in telemetry message 156) along with a targeted message response indicating the results of analyzing telemetry data (by telemetry service 128). ACK 152 and/or ACK 154 can also include targeted message responses directed to modules at computer system 101. Thus, data for other non-telemetry related modules can be included in an ACK eliminating the need to send the data in a separate message. This piggybacking potentially conserves network bandwidth.

Telemetry services 132 and 128 can be configured to appropriately include a targeted message response in an ACK. Telemetry component 122 can be configured to dispatch any targeted message responses to the appropriate modules.

Accordingly, a telemetry acknowledgement (e.g., a SOAP message) can include a TelemetryResponse element containing one or more StreamAck elements, one or more StreamRawAck elements, and one or more target message responses. The following XML portion represents an example ACK formatted in accordance with the example formats in the targeted message response and telemetry acknowledgement XSD document:

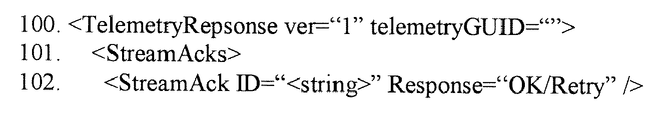

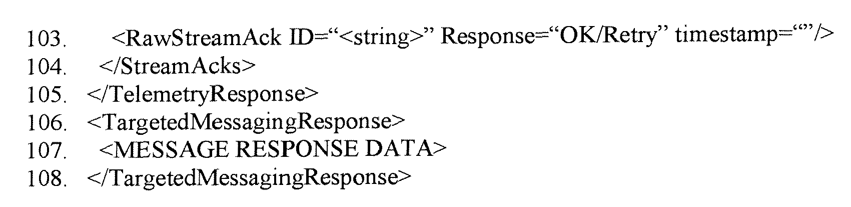

Lines 100-105 represent a TelemetryResponse element. The attributes and corresponding attribute values ver="1" telemetryGUID="" can be used to identify the TelemetryResponse element.

Lines 101-104 represent a StreamAcks element. Line 102 represents a StreamAck element. The attributes and corresponding values ID="<string>" and Response="OK/Retry" (at line 101) identify a specified stream (e.g., stream 141 or stream 143) and indicate whether data received via the stream is OK or is to be re-sent. Line 103 represents a RawStreamAck element. The attributes and corresponding values ID="<string>" and Response="OK/Retry" (at line 102) identify a specified raw stream (e.g., stream 141 or stream 143) and indicate whether data received via the raw stream is OK or is to be re-sent. The attribute and corresponding value timestamp='''' (at line 102) indicates a time when the response was formulated.

Lines 106-108 represent a TargetedMessageResponse. Line 107 represents message response data that can be piggybacked along with the telemetry response at lines 100-105 in an ACK.

Method 200 includes an act of receiving an acknowledgement indicating reception of the telemetry message (act 206). For example, telemetry component 122 can receive ACK 152 and/or ACK 154. Alternately, for example, when there is an error condition, telemetry component 122 can receive an indication of what portions of telemetry data were received and do not need to be retransmitted, and what portions were not received and should be retransmitted if appropriate.

Accordingly, embodiments of the present invention facilitate the generic collection and delivery of telemetry data. Applications can send telemetry data through a common telemetry interface to a telemetry component that stores the telemetry data in a telemetry database. Pluggable back end components register for telemetry data of interest and interface with a telemetry service to receive appropriate telemetry data. Targeted messages can be piggybacked within telemetry messages and acknowledgements such that network bandwidth is conserved.

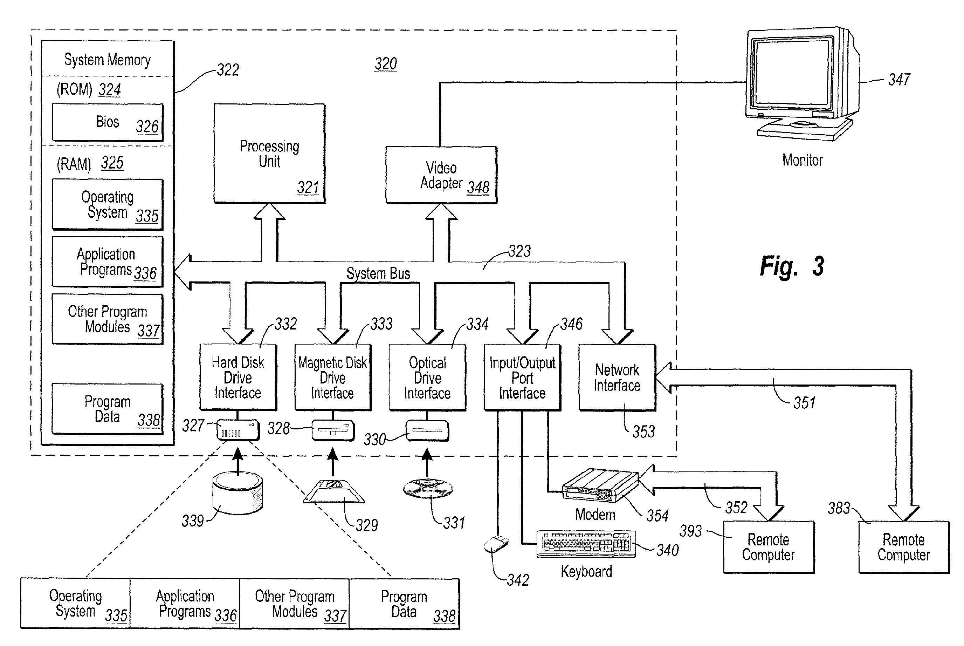

Figure 3 illustrates a suitable operating environment for the principles of the present invention. Figure 3 and the following discussion are intended to provide a brief, general description of a suitable computing environment in which the invention may be implemented. Although not required, the invention will be described in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

With reference to Figure 3, an example system for implementing the invention includes a general-purpose computing device in the form of computer system 320, including a processing unit 321, a system memory 322, and a system bus 323 that couples various system components including the system memory 322 to the processing unit 321. Processing unit 321 can execute computer-executable instructions designed to implement features of computer system 320, including features of the present invention. The system bus 323 may be any of several types of bus structures including a memory bus or memory controller, a peripheral bus, and a local bus using any of a variety of bus architectures. The system memory includes read only memory ("ROM") 324 and random access memory ("RAM") 325. A basic input/output system ("BIOS") 326, containing the basic routines that help transfer information between elements within computer system 320, such as during start-up, may be stored in ROM 324.

The computer system 320 may also include magnetic hard disk drive 327 for reading from and writing to magnetic hard disk 339, magnetic disk drive 328 for reading from or writing to removable magnetic disk 329, and optical disk drive 330 for reading from or writing to removable optical disk 331, such as, for example, a CD-ROM or other optical media. The magnetic hard disk drive 327, magnetic disk drive 328, and optical disk drive 330 are connected to the system bus 323 by hard disk drive interface 332, magnetic disk drive-interface 333, and optical drive interface 334, respectively. The drives and their associated computer-readable media provide nonvolatile storage of computer-executable instructions, data structures, program modules, and other data for the computer system 320. Although the example environment described herein employs magnetic hard disk 339, removable magnetic disk 329 and removable optical disk 331, other types of computer readable media for storing data can be used, including magnetic cassettes, flash memory cards, digital versatile disks, Bernoulli cartridges, RAMs, ROMs, and the like.

Program code means comprising one or more program modules may be stored on hard disk 339, magnetic disk 329, optical disk 331, ROM 324 or RAM 325, including an operating system 335, one or more application programs 336, other program modules 337, and program data 338. A user may enter commands and information into computer system 320 through keyboard 340, pointing device 342, or other input devices (not shown), such as, for example, a microphone, joy stick, game pad, scanner, or the like. These and other input devices can be connected to the processing unit 321 through input/output interface 346 coupled to system bus 323. Input/output interface 346 logically represents any of a wide variety of different interfaces, such as, for example, a serial port interface, a PS/2 interface, a parallel port interface, a Universal Serial Bus ("USB") interface, or an Institute of Electrical and Electronics Engineers ("IEEE") 1394 interface (i.e., a FireWire interface), or may even logically represent a combination of different interfaces.

A monitor 347 or other display device is also connected to system bus 323 via video interface 348. Other peripheral output devices (not shown), such as, for example, speakers and printers, can also be connected to computer system 320.

Computer system 320 is connectable to networks, such as, for example, an office-wide or enterprise-wide computer network, a home network, an intranet, and/or the Internet. Computer system 320 can exchange data with external sources, such as, for example, remote computer systems, remote applications, and/or remote databases over such networks.

Computer system 320 includes network interface 353, through which computer system 320 receives data from external sources and/or transmits data to external sources. As depicted in Figure 3, network interface 353 facilitates the exchange of data with remote computer system 383 via link 351. Network interface 353 can logically represent one or more software and/or hardware modules, such as, for example, a network interface card and corresponding Network Driver Interface Specification ("NDIS") stack. Link 351 represents a portion of a network (e.g., an Ethernet segment), and remote computer system 383 represents a node of the network.

Likewise, computer system 320 includes input/output interface 346, through which computer system 320 receives data from external sources and/or transmits data to external sources. Input/output interface 346 is coupled to modem 354 (e.g., a standard modem, a cable modem, or digital subscriber line ("DSL") modem) via link 359, through which computer system 320 receives data from and/or transmits data to external sources. As depicted in Figure 3, input/output interface 346 and modem 354 facilitate the exchange of data with remote computer system 393 via link 352. Link 352 represents a portion of a network and remote computer system 393 represents a node of the network.

While Figure 3 represents a suitable operating environment for the present invention, the principles of the present invention may be employed in any system that is capable of, with suitable modification if necessary, implementing the principles of the present invention. The environment illustrated in Figure 3 is illustrative only and by no means represents even a small portion of the wide variety of environments in which the principles of the present invention may be implemented.

In accordance with the present invention, modules including applications, telemetry interfaces, telemetry components, telemetry services, and backend components as well as associated data, including, telemetry data, telemetry messages, targeted messages, and acknowledgments, can be stored and accessed from any of the computer-readable media associated with computer system 320. For example, portions of such modules and portions of associated program data may be included in operating system 335, application programs 336, program modules 337 and/or program data 338, for storage in system memory 322.

When a mass storage device, such as, for example, magnetic hard disk 339, is coupled to computer system 320, such modules and associated program data may also be stored in the mass storage device. In a networked environment, program modules depicted relative to computer system 320, or portions thereof, can be stored in remote memory storage devices, such as, system memory and/or mass storage devices associated with remote computer system 383 and/or remote computer system 393. Execution of such modules may be performed in a distributed environment as previously described.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. At a computer system including a telemetry component, a telemetry database, and a plurality of applications, a method of delivering telemetry data, the method comprising:
an act of the telemetry component receiving telemetry data from an application at the computer system, the telemetry data being received through a common telemetry interface that is accessible to the plurality of applications;
an act of aggregating the received telemetry data with any existing telemetry data in the telemetry database;
an act of detecting a send telemetry event;
an act of including an appropriate portion of the aggregated telemetry data in a telemetry message;
an act of sending a telemetry stream, via the telemetry message, to a telemetry service in response to the detected send telemetry event; and
an act or receiving an acknowledgment from the telemetry service, the acknowledgment indicating that telemetry service received the telemetry message.

2. The method as recited in claim 1, wherein the act the telemetry component receiving telemetry data from an application at the computer system comprises an act of receiving snapshot telemetry data.

3. The method as recited in claim 1, wherein the act the telemetry component receiving telemetry data from an application at the computer system comprises an act of receiving at least one name/value pair.

4. The method as recited in claim 1, wherein the act of detecting a send telemetry event comprises an act of detecting the expiration of a timer.

5. The method as recited in claim 1, wherein the act of including an appropriate portion of the aggregated telemetry data in a telemetry message comprises an act of including XML instructions in the telemetry message.

6. The method as recited in claim 1, wherein the act of including an appropriate portion of the aggregated telemetry data in a telemetry message comprises an act of including at least one name/value pair in the telemetry message.

7. The method as recited in claim 1, wherein the act of including an appropriate portion of the aggregated telemetry data in a telemetry message comprises an act of including custom telemetry data in the telemetry message.

8. The method as recited in claim 1, wherein the act of sending a telemetry stream, via the telemetry message, to a telemetry service in response to the detected send telemetry event comprises an act of sending at least one name/value pair.

9. The method as recited in claim 1, wherein the act of sending a telemetry stream, via the telemetry message, to a telemetry service in response to the detected send telemetry event comprises an act of sending raw telemetry data.

10. The method as recited in claim 1, wherein the act of receiving an acknowledgment from the telemetry service comprises an act of receiving an acknowledgement message that includes a targeted message response.

11. The method as recited in claim 1, further comprising:
an act of piggybacking a targeted message request in the telemetry message.

12. At a computer system including a telemetry service, a method of dispatching telemetry data, the method comprising:
an act of the telemetry service receiving a telemetry stream, via a corresponding telemetry message, from a telemetry component;
an act of extracting telemetry data of a specified type from the telemetry message;
an act of identifying one or more pluggable telemetry handlers that have registered for telemetry data of the specified type;
an act of dispatching the extracted telemetry data to the one or more identified pluggable telemetry handlers; and
an act of sending an acknowledgment to the telemetry component, the acknowledgment indicating that telemetry service received the telemetry message and whether the telemetry service was able to process portions of the telemetry message.

13. The method as recited in claim 12, further comprising:
an act of the telemetry service receiving registrations from the one or more pluggable telemetry handlers, the registrations indicating that the one or more pluggable telemetry handlers are interested in the specified type of telemetry data.

14. The method as recited in claim 12, wherein the act of receiving a telemetry stream comprises an act of receiving one or more name/value pairs.

15. The method as recited in claim 12, wherein the act of receiving a telemetry stream comprises an act of receiving raw telemetry data.

16. The method as recited in claim 12, wherein the act of receiving a telemetry stream comprises an act of receiving a telemetry message that includes a targeted message request.

17. The method as recited in claim 12, wherein the act of receiving a telemetry stream comprises an act of sampling a subset of available telemetry components that submit telemetry data to the telemetry stream.

18. The method as recited in claim 12, wherein the act of extracting telemetry data of a specified type from the telemetry message comprises an act of extracting one or more name value pairs from the telemetry message.

19. The method as recited in claim 12, wherein the act of extracting telemetry data of a specified type from the telemetry message comprises an act of extracting XML attributes.

20. The method as recited in claim 12, further comprising:
an act of piggybacking a targeted message response in the acknowledgement.

21. A computer program product for use at a computer system including a telemetry service, the computer program product for implementing a method of dispatching telemetry data, the computer program product comprising one or more computer-readable media having stored thereon computer-executable instructions that, when executed by a processor, cause the computer system to perform the following:
receive a telemetry stream, via a corresponding telemetry message, from a telemetry component;
extract telemetry data of a specified type from the telemetry message;
identify one or more pluggable telemetry handlers that have registered for telemetry data of the specified type;
dispatch the extracted telemetry data to the one or more identified pluggable telemetry handlers; and
send an acknowledgment to the telemetry component, the acknowledgment indicating that telemetry service received the telemetry message and whether the telemetry service was able to process portions of the telemetry message.
